# EUROPÄISCHE PATENTSCHRIFT

(11) **EP 1 538 644 B1**
(45) Veröffentlichungstag und Bekanntmachung des Hinweises auf die Patenterteilung: **26.11.2008**
(21) Anmeldenummer: 04028803.7
(22) Anmeldetag: 04.12.2004
(51) Int. Cl.: H01H 3/08, B60R 21/09, G05G 1/08

(54) **Bedien- und/oder Anzeigeeinrichtung für den Innenraum eines Fahrzeuges, insbesondere Fahrzeugbedieneinheit**
Control and/or display for the interior of a vehicle, especially a vehicle control device
Dispositif de commande et/ou d'affichage pour l'habitacle d'un véhicule, nottament dispositif de commande pour un véhicule

(30) Priorität: 06.12.2003 DE 10357138
(43) Veröffentlichungstag der Anmeldung: 08.06.2005
(73) Patentinhaber: Behr-Hella Thermocontrol GmbH, D-70469 Stuttgart (DE); Behr GmbH & Co. KG, 70469 Stuttgart (DE)
(72) Erfinder: Voss, Thorsten, 37671 Höxter-Brenkhausen (DE); Voigt, Christian G., 59556 Lippstadt Bad Waldliesborn (DE)
(74) Vertreter: von Kreisler Selting Werner

(56) Entgegenhaltungen:
- EP-A- 1 248 274
- DE-A1- 2 557 859

## Beschreibung

Die vorliegende Erfindung bezieht sich auf eine Bedien- und/oder Anzeigeeinrichtung für den Innenraum eines Fahrzeuges, insbesondere auf eine Fahrzeugbedieneinheit.

Trotz inzwischen hoch entwickelter Gurtrückhaltesysteme kann der Kopf eines Fahrzeuginsassen bei einer ungünstigen Unfallsituation noch auf Innenraumkomponenten des Fahrzeugs auftreffen, was zu schweren Verletzungen führen kann.

Um die Gefahr für die Fahrzeuginsassen bei derartigen Unfällen weiter zu reduzieren, wurden seitens des Gesetzgebers spezielle Konstruktions- und Wirkvorschriften in Bezug auf den Kopfaufprall auf Fahrzeuginnenraumkomponenten erlassen, wie beispielsweise die europäische Richtlinie ECE-R21. Die ECE-R21 verlangt unter anderem, dass Teile, wie beispielsweise Schalter oder Knöpfe, die mehr als 9,5 mm aus der Oberfläche der Bedieneinheit herausragen, derart beschaffen sein müssen, dass sie unter der Wirkung einer nach vorn gerichteten horizontalen Längskraft von 37,8 daN, die beim Kopfaufschlagtest mittels eines Stempels mit ebener Druckfläche und einem Durchmesser von nicht mehr als 50 mm aufgebracht wird, in die Oberfläche der Bedieneinheit so eingedrückt werden, dass sie nicht mehr als 9,5 mm vorstehen oder sich ablösen.

DE-A-25 57 859 beschreibt eine Bedieneinrichtung nach dem Oberbegriff des Anspruchs 1 für die Instrumententafel eines Fahrzeuges in Form eines Drehknopfes, der entlang von Führungsstiften verschiebbar geführt und in eine Ausrückstellung durch Federn vorgespannt sowie entgegen den Vorspannkräften in die Instrumententafel hinein zurückbewegbar ist, wenn eine überhöhte Kraft auf den Drehknopf wirkt.

DE 199 64 133 A1 beschreibt einen Drehschalter mit Bruchstellen, der bei einem erhöhten Kraftdruck in axialer Richtung in eine Frontblende hinein eintaucht. Die Bruchstellen können als nachgebende Rippen mit einer Sollbruchstelle oder als Federelemente ausgebildet sein.

DE 100 54 588 A1 offenbart ein elektronisches Gerät, das ein Gehäuse mit einer in diesem befestigten Leiterplatte aufweist. Die Leiterplatte trägt u.a. Bedienelemente, die aus dem Gehäuse herausragen. Die Leiterplatte verfügt über Sollbruchstellen, die zu einer Trennung des die Bedienelemente tragenden Teils der Leiterplatte von deren Gehäusebefestigungsstellung führen, wenn auf die Bedienelemente in Richtung der Leiterplatte unzulässig hohe Kräfte wirken.

DE 298 22 594 U1 und DE 295 17 468 U1 betreffen ein in den Insassenraum eines Fahrzeuges ragendes Anbauteil wie z.B. Haltegriff, dass an einem Rohbauteil der Fahrzeugkarosserie gelagert ist. Der Lagerung zugeordnet ist ein bei Aufprall eines Insassen unter Deformation nachgebendes Bauteil.

Es ist eine Aufgabe der vorliegenden Erfindung, eine Bedien- und/oder Anzeigeeinrichtung für den Innenraum eines Fahrzeuges, insbesondere einer Fahrzeugbedieneinheit zu schaffen, die im Falle eines Unfalls zerstörungsfrei abtauchen kann.

Diese Aufgabe wird gemäß der vorliegenden Erfindung durch eine Bedienund/oder Anzeigeeinrichtung für den Innenraum eines Fahrzeuges, insbesondere durch eine Fahrzeugbedieneinheit nach Anspruch 1, gelöst.

Bei der Bedien- und/oder Anzeigeeinrichtung, nachfolgend nur als Bedieneinrichtung bezeichnet, kann es sich um einzelne Betätigungselemente eines Fahrzeuges, wie beispielsweise um einen Schalter, einen Drehknopf oder ein Display, und insbesondere um eine (vollständige) Bedieneinheit, wie z.B. die Bedieneinheit einer Fahrzeugheizungs- bzw. Klimaanlage handeln.

Die erfindungsgemäße Bedieneinrichtung umfasst ein Gehäuse, an dem ein oder mehrere Umgreifelemente ausgebildet sind. Die Umgreifelemente dienen jeweils zum Umgreifen entsprechender Führungselemente, die an einem Fahrzeug bzw. an einer Fahrzeugkomponente, wie beispielsweise am Fahrzeugcockpit oder an der Rückseite des Fahrersitzes, befestigt werden können. Das Gehäuse wird demnach mit Hilfe der Umgreifelemente und der Führungselemente am Fahrzeug befestigt.

Im Normalbetrieb ist jedes Umgreifelement in einer ersten Stellung ortsfest an dem Führungselement gehalten. In dieser ersten Stellung stehen die Betätigungselemente der Bedieneinrichtung von der Oberfläche derjenigen Fahrzeugkomponente, an der die Bedieneinrichtung befestigt ist, also beispielsweise vom Fahrzeugcockpit, vor und sind somit einfach durch den Fahrzeuginsassen zu handhaben. Nach Aufbringen einer einen vorbestimmten Maximalwert überschreitenden, auf das Gehäuse der Bedieneinrichtung und in Richtung der Erstreckung des Führungselementes wirkenden Aufschlagkraft, die beispielsweise durch den Aufschlag des Kopfes eines Fahrzeuginsassen erzeugt werden kann, wird das Umgreifelement zusammen mit dem Gehäuse entlang des Führungselementes aus der ersten Stellung in eine zweite Stellung bewegt, wobei das Umgreifelement während dieser Bewegung durch das Führungselement geführt ist. In dieser zweiten Stellung ist die Bedieneinrichtung in die Oberfläche derjenigen Fahrzeugkomponente, an dem die Bedieneinrichtung angeordnet ist, versenkt, so dass sich der Fahrzeuginsasse aufgrund des Überstandes der Bedieneinrichtung keine Verletzungen zuziehen kann.

Ein wesentlicher Vorteil der erfindungsgemäßen Bedieneinrichtung besteht darin, dass während der Bewegung des Umgreifelementes aus der ersten Stellung in die zweite Stellung keine Bauteile der Bedieneinrichtung oder des Fahrzeuges zerstört werden. Während einer sich anschließenden Reparatur kann das Gehäuse der Bedieneinrichtung zusammen mit den Umgreifelementen auf einfache Weise entlang der Führungselemente aus der zweiten Stellung zurück in die erste Stellung bewegt werden, ohne dass ein Bauteil ersetzt werden muss. Dies ist insbesondere dann von Vorteil, wenn die Kraft, aufgrund derer die Bedieneinrichtung aus der ersten Stellung in die zweite Stellung bewegt wird, versehentlich und nicht infolge eines Unfalls ausgeübt wird.

Gemäß der vorliegenden Erfindung ist das Umgreifelement rastend in der ersten Stellung an dem Führungselement angeordnet, um das Umgreifelement während des Normalbetriebes ortsfest in dieser ersten Stellung zu halten. Bei Aufbringen einer den vorbestimmten Maximalwert überstreitenden Aufschlagkraft wird die Rastkraft zwischen dem Umgreifelement und dem Führungselement überwunden, so dass sich das Umgreifelement aus seiner ersten Stellung in seine zweite Stellung bewegen kann. Das Vorsehen einer Rastverbindung zwischen dem Umgreifelement und dem Führungselement weist den Vorteil auf, dass die Rastkraft mit geringen Toleranzen einstellbar ist.

Vorzugsweise ist das Umgreifelement gemäß der vorliegenden Erfindung in einer in dem Führungselement ausgebildeten Nut rastend gehalten.

Bei einer Alternative gemäß der vorliegenden Erfindung weist die Bedien- und/oder Anzeigeeinrichtung ferner ein das Führungselement teilweise umschließendes, rastend an diesem gehaltenes Anlageelement auf, an dem das Umgreifelement anliegt und das das Umgreifelement im Normalbetrieb ortsfest in seiner ersten Stellung hält. Beim Aufbringen einer einen vorbestimmten Maximalwert überschreitenden Aufschlagkraft wird die Rastkraft zwischen dem Anlageelement und der Nut überwunden und das Anlageelement zusammen mit dem Umgreifelement entlang des Führungselementes aus der ersten Stellung in Richtung der zweiten Stellung bewegt. In dieser zweiten Stellung ist die Bedieneinrichtung, wie bei den zuvor beschriebenen Alternativen, versenkt angeordnet, so dass die Verletzungsgefahr für die Fahrzeuginsassen minimiert wird.

Gemäß der vorliegenden Erfindung ist das Anlageelement bevorzugt ring- oder hülsenförmig ausgebildet.

Schließlich ist es gemäß der vorliegenden Erfindung vorteilhaft, dass das Umgreifelement "schwimmend" an dem Führungselement gehalten ist, um ein radiales Spiel zu erzeugen. Auf diese Weise können bei der Befestigung der Bedieneinrichtung an einem Fahrzeug größere Fertigungstoleranzbereiche der Bedieneinrichtung oder derjenigen Fahrzeugkomponente, an der die Bedieneinrichtung angeordnet werden soll, zugelassen werden

Nachfolgend wird die vorliegende Erfindung anhand einiger Ausführungsbeispiele unter Bezugnahme auf die beiliegende Zeichnung beschrieben. Darin zeigt
- Fig. 1: eine perspektivische Ansicht, die ein Ausführungsbeispiel eines Gehäuses der Bedieneinrichtung gemäß der vorliegenden Erfindung zeigt;
- Fig. 2: eine Querschnittansicht einer ersten Alternative der Bedieneinrichtung gemäß der vorliegenden Erfindung, die das in Fig. 1 dargestellte Gehäuse im eingebauten Zustand in einer ersten Stellung zeigt;
- Fig. 3: eine Ausschnittvergrößerung des in Fig. 2 durch einen Kreis gekennzeichneten Ausschnitts;
- Fig. 4: eine Querschnittansicht der in Fig. 2 gezeigten ersten Alternative der Bedieneinrichtung gemäß der vorliegenden Erfindung, die das in Fig. 1 dargestellte Gehäuse im eingebauten Zustand in einer zweiten Stellung zeigt;
- Fig. 5: eine Querschnittansicht einer Alternative der Bedieneinrichtung gemäß der vorliegenden Erfindung, die das in Fig. 1 dargestellte Gehäuse im eingebauten Zustand in einer ersten Stellung zeigt;
- Fig. 6: eine Ausschnittvergrößerung des in Fig. 5 durch einen Kreis gekennzeichneten Ausschnitts;
- Fig. 7: eine Querschnittansicht der Alternative der Bedieneinrichtung gemäß der vorliegenden Erfindung, die das in Fig. 1 dargestellte Gehäuse im eingebauten Zustand in einer zweiten Stellung zeigt; und
- Fig. 8: eine Draufsicht eines Anlageelementes, das in der Alternative der Bedieneinrichtung gemäß der vorliegenden Erfindung verwendet wird.

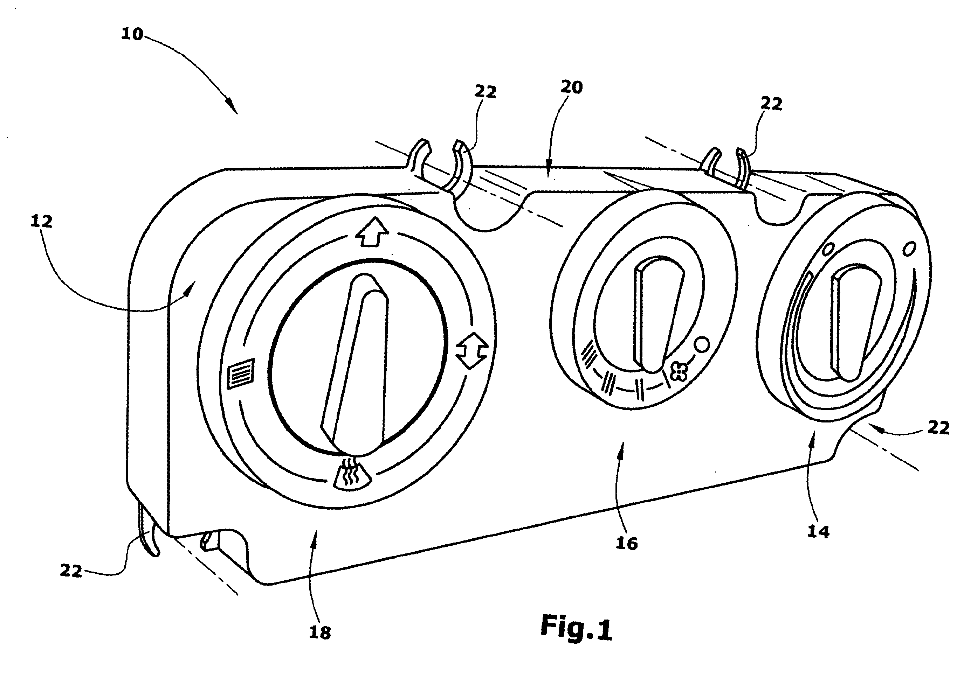

Fig. 1 ist eine schematische Ansicht eines Gehäuses 10 der Bedieneinrichtung gemäß der vorliegenden Erfindung. Bei der Bedieneinrichtung handelt es sich im vorliegenden Fall um das Steuergerät zum Betätigen einer Fahrzeugheizungsanlage. An einer Vorderwand 12 des Gehäuses 10 sind mehrere Drehknöpfe 14, 16, 18 zum Einstellen der Temperatur, der Gebläsestärke und des Austrittsortes des durch die Heizungsanlage erzeugten Luftstroms angeordnet. Entlang einer Seitenwand 20 des Gehäuses 10 sind mehrere Umgreifelemente 22 ausgebildet, die zur Befestigung des Gehäuses 10 an einem Fahrzeug dienen. Die Umgreifelemente 22 sind im vorliegenden Fall einteilig mit dem Gehäuse 10 ausgebildet und weisen im wesentlichen eine Ringkontur auf. Die Ringkontur ist an einer Seite offen, um die Elastizität der Umgreifelemente 22 zu erhöhen. Es sollte jedoch klar sein, dass die Umgreifelemente verschiedene Konturen annehmen können, beispielsweise eine ähnliche Kontur wie das in Fig. 11 dargestellte Anlageelement, was nachfolgend noch näher erläutert wird.

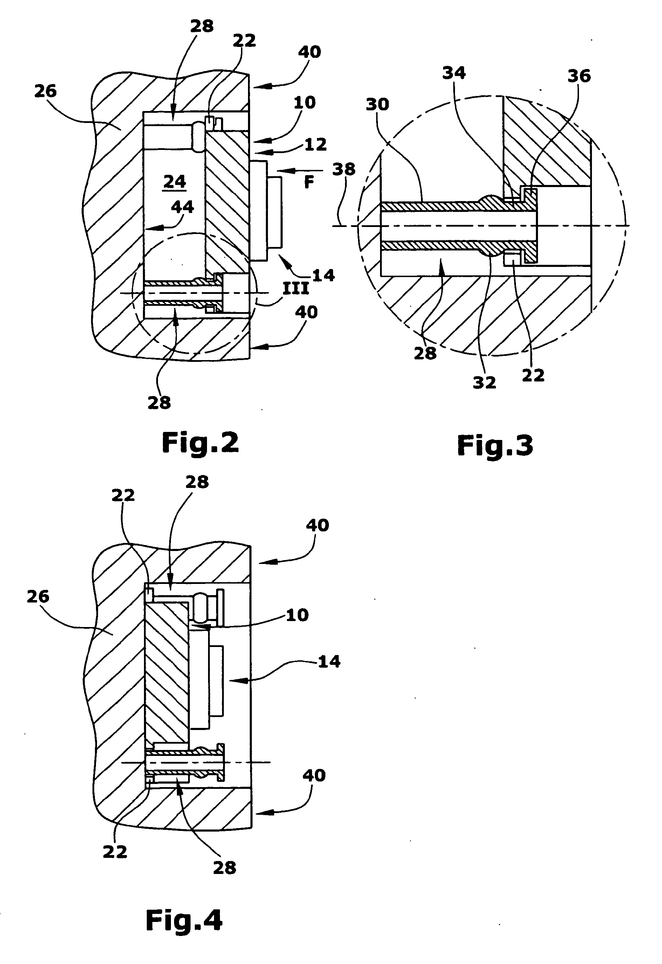

In Fig. 2 ist eine Querschnittansicht einer ersten Alternative der Bedieneinrichtung gemäß der vorliegenden Erfindung dargestellt, die das in Fig. 1 dargestellte Gehäuse 10 im eingebauten Zustand zeigt. Das Gehäuse 10 ist in eine Aussparung 24 eines Fahrzeugcockpits 26, das in Fig. 2 nur schematisch dargestellt ist, mit Hilfe von Führungselementen 28 angeordnet, die sich durch die Umgreifelemente 22 hindurch erstrecken.

Die Art und Weise der Befestigung wird nachfolgend unter Bezugnahme auf Fig. 3 genauer beschrieben, die eine Ausschnittvergrößerung des in Fig. 2 durch einen Kreis gekennzeichneten Ausschnitts darstellt.

Wie in Fig. 3 zu erkennen ist, umfasst das Führungselement 28 mehrere Abschnitte, nämlich, in Fig. 3 von links nach rechts betrachtet, einen zylindrischen Führungsabschnitt 30, einen sich an den Führungsabschnitt 30 anschließenden wulstförmigen Abschnitt 32, der einen größeren Außendurchmesser als der Führungsabschnitt 30 aufweist, einen nutartigen Aufnahmeabschnitt 34, der im wesentlichen den gleichen Außendurchmesser wie der Führungsabschnitt 30 aufweist und zur Aufnahme des Umgreifelementes 22 des Gehäuses 10 dient, und schließlich einen im wesentlichen ringförmig vorstehenden Abschnitt 36, der in einer Richtung als Anschlag für das Umgreifelement 22 des Gehäuses 10 dient. Das Führungselement 28 weist in seiner Längsrichtung, also vom Führungsabschnitt 30 bis zum ringförmig vorstehenden Abschnitt 36 eine Durchgangsbohrung 38 auf. Das Führungselement 28 ist mit Hilfe einer durch die Durchgangsbohrung 38 geführten Schraube, die in den Fign. 2 bis 4 lediglich durch eine Strichpunktlinie angedeutet ist, an dem Fahrzeugcockpit 26 befestigt. Das Umgreifelement 22 ist in dem Aufnahmeabschnitt 34 des Führungselementes 28 zwischen dem wulstförmigen Abschnitt 32 und dem ringförmig vorstehenden Abschnitt 36 des Führungselementes 28 gehalten. Diese Stellung wird nachfolgend als erste Stellung bezeichnet. Der Innendurchmesser des im wesentlichen ringförmigen Umgreifelementes 22 ist geringfügig kleiner als der Durchmesser des wulstförmigen Abschnittes 32 des Führungselementes 28, so dass das Umgreifelement 22 sicher in der ersten Stellung gehalten ist und nicht versehentlich über den wulstförmigen Abschnitt 32 gleiten kann. In dieser ersten Stellung schließt die Vorderwand 12 des Gehäuses 10 im wesentlichen bündig mit der Oberfläche 40 des Fahrzeugcockpits 26 ab, wie es in Fig. 2 zu erkennen ist, so dass der an dem Gehäuse 10 angeordnete Drehknopf 14 sowie die in Fig. 2 verdeckten Drehknöpfe 16 und 18 relativ zur Oberfläche 40 des Fahrzeugcockpits 26 vorstehen und folglich gut von dem Fahrzeuginsassen zu betätigen sind.

Trifft im Falle eines Unfalls beispielsweise der Kopf eines Fahrzeuginsassen auf einen der Drehknöpfe 14, 16, 18 oder auf die Vorderwand 12 des Gehäuses 10 auf, so wird durch diesen Aufprall eine Aufschlagkraftkomponente erzeugt, die auf das Gehäuse 10 und in Richtung der Längserstreckung der Führungselemente 28 wirkt. Diese Aufschlagkraftkomponente ist in Fig. 2 mit dem Pfeil F gekennzeichnet. Überschreitet diese Aufschlagkraftkomponente F einen vorbestimmten Maximalwert, der nachfolgend als Fₘₐₓ bezeichnet wird, so bewegen sich die Umgreifelemente 22 zusammen mit dem Gehäuse 10 aus der in Fig. 2 dargestellten ersten Stellung in Richtung der in Fig. 4 dargestellten zweiten Stellung, was nachfolgend näher beschrieben ist.

Durch die auf das Gehäuse 10 wirkende Aufschlagkraftkomponente werden die Umgreifelemente 22 gegen die entsprechenden wulstförmigen Abschnitte 32 der Führungselemente 28 gedrückt. Durch die Krafteinwirkung weiten sich die Innendurchmesser der entsprechenden Umgreifelemente 22 derart auf, dass sich die Umgreifelemente 22 in Richtung auf den maximalen Durchmesser der entsprechenden wulstförmigen Abschnitte 32 der Führungselemente 28 zu bewegen. Erreicht die Aufschlagkraftkomponente F den vorbestimmten Maximalwert Fₘₐₓ, so weitet sich der Innendurchmesser der einzelnen Umgreifelemente 22 derart auf, dass sich die jeweiligen Umgreifelemente 22 über den maximalen Durchmesser der entsprechenden wulstförmigen Abschnitte 32 der Führungselemente 28 hinweg in Richtung auf die Führungsabschnitte 30 der Führungselemente 28 zu bewegen, bis die Umgreifelemente 22 bzw. die Rückwand 42 des Gehäuses 10 an der Rückwand 44 des Fahrzeugcockpits 26 anschlagen. Diese Stellung ist in Fig. 4 dargestellt und wird nachfolgend als zweite Stellung bezeichnet. In dieser zweiten Stellung sind die Drehknöpfe 14, 16, 18 vollständig relativ zur Oberfläche 40 des Fahrzeugcockpits 26 versenkt. Auf diese Weise ist sichergestellt, dass der auf die Bedieneinrichtung gemäß der vorliegenden Erfindung aufschlagende Körperteil des Fahrzeuginsassen keine schweren Verletzungen durch die in der in Fig. 2 dargestellten ersten Stellung vorstehenden Drehknöpfe 14, 16, 18 erfährt.

Zur Erfüllung der EU-Richtlinie ECE-R21 darf der vorbestimmte Maximalwert Fₘₐₓ der Aufschlagkraftkomponente F 37,8 daN nicht überschreiten und ist bevorzugt kleiner als dieser Wert gewählt. Es sollte klar sein, dass der vorbestimmte Maximalwert Fₘₐₓ beliebig eingestellt werden kann. Der vorbestimmte Maximalwert Fₘₐₓ ist dabei im wesentlichen von der Durchmesserdifferenz zwischen dem maximalen Durchmesser des wulstförmigen Abschnittes 32 des Führungselementes 28 und dem Innendurchmesser des Umgreifelementes 22 des Gehäuses 10 abhängig. Ferner kann der vorbestimmte Maximalwert Fₘₐₓ durch die Elastizität des Umgreifelementes 22 beeinflusst werden. Die Elastizität des Umgreifelementes ist einerseits von dem für das Umgreifelement 22 verwendeten Material und andererseits von der Form des Umgreifelementes, also von absichtlich vorgesehenen sogenannten Materialschwächungen abhängig. Letzteres wird nachfolgend noch unter Bezugnahme auf Fig. 11 für ein Anlageelement analog beschrieben.

Ferner sei darauf hingewiesen, dass das radiale Spiel zwischen dem Innendurchmesser des Umgreifelementes 22 des Gehäuses 10 und dem Aufnahmeabschnitt 34 des Führungselementes 28 derart gewählt werden kann, dass eine "schwimmende" Aufnahme des Umgreifelementes 22 in dem Aufnahmeabschnitt 32 erzeugt wird. Auf diese Weise können die Fertigungstoleranzbereiche des Gehäuses 10 bzw. der Aussparung 24 des Fahrzeugcockpits 26 größer gewählt werden, so dass das Gehäuse 10 einfacherer in der Aussparung 24 des Fahrzeugcockpits 26 und die Lagetoleranzbereiche der Führungselemente 28 angeordnet werden kann.

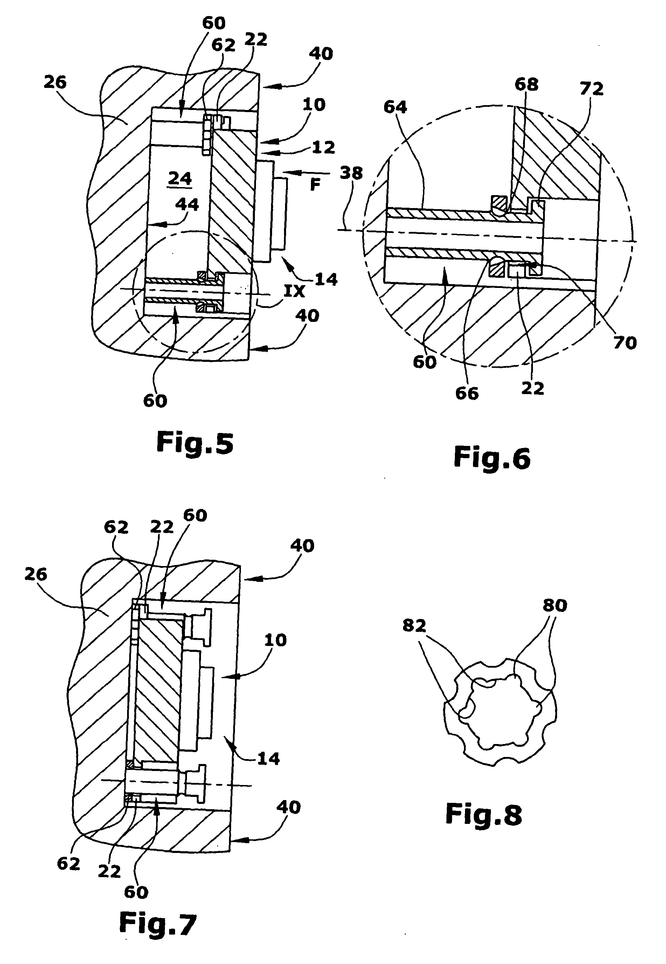

Die Fign. 5 bis 8 zeigen schließlich eine Alternative der Bedieneinrichtung gemäß der vorliegenden Erfindung. Fig. 5 ist eine Querschnittansicht, die das in Fig. 1 dargestellte Gehäuse 10 in einer ersten Stellung im eingebauten Zustand zeigt. Ähnlich wie in den zuvor beschriebenen Ausführungsbeispielen ist das Gehäuse 10 in der Aussparung 24 des Fahrzeugcockpits 26 angeordnet und mit Hilfe von Führungselementen 60, die sich durch die entsprechenden Umgreifelemente 22 des Gehäuses 10 erstrecken und an der Rückwand 44 des Fahrzeugcockpits 26 mit Hilfe von Schrauben befestigt sind, sowie mit Hilfe von Anlageelementen 62 in der ersten Stellung gehalten, was unter Bezugnahme auf 9 noch genauer beschrieben ist. In der ersten Stellung schließt die Vorderwand 12 des Gehäuses 10 im wesentlichen bündig mit der Oberfläche 40 des Fahrzeugcockpits 26 ab, so dass die Drehknöpfe 14, 16, 18 von der Oberfläche 40 des Fahrzeugcockpits 26 vorstehen und folglich einfach durch den Fahrzeuginsassen zu betätigen sind.

Wie in Fig. 6 zu erkennen, weist das Führungselement 60 mehrere Abschnitte auf, nämlich, in Fig. 6 von links nach rechts betrachtet, einen zylindrischen Führungsabschnitt 64, einen wulstförmigen Abschnitt 66, der einen größeren Durchmesser als der Führungsabschnitt 64 aufweist, einen sich an den wulstförmigen Abschnitt 66 anschließenden nutförmigen Abschnitt 68, dessen Durchmesser im wesentlichen dem Durchmesser des Führungsabschnittes 64 entspricht und der zur Aufnahme des Anlageelementes 62 dient, einen Aufnahmeabschnitt 68, dessen Durchmesser im wesentlichen dem Durchmesser des wulstförmigen Abschnittes 66 entspricht und der zur Aufnahme des Umgreifelementes 22 des Gehäuses 10 dient, und schließlich einen ringförmig vorstehenden Abschnitt 72, der in einer Richtung als Anschlag für das Umgreifelement 22 dient. Das Anlageelement 62 ist im wesentlichen ringförmig, wie nachfolgend unter Bezugnahme auf Fig. 8 noch näher erläutert ist. Der Innendurchmesser des Anlageelementes 62 ist kleiner als derjenige des wulstförmigen Abschnittes 66 des Führungselementes 60, jedoch größer als derjenige des Führungsabschnittes 64. Der Innendurchmesser des Umgreifelementes 22 ist größer als der jeweilige Durchmesser der Abschnitte 64, 66, 68 des Führungselementes 60, jedoch kleiner als der Durchmesser des ringförmig vorstehenden Abschnittes 72. In der in den Fign. 5 und 6 dargestellten ersten Stellung ist jedes der Umgreifelemente 22 um den Aufnahmeabschnitt 70 des Führungselementes 60 angeordnet und ortsfest zwischen dem Anlageelement 62 und dem ringförmig vorstehenden Abschnitt 72 des Führungselementes 60 gehalten.

Schlägt nun während eines Unfalls beispielsweise der Kopf eines Fahrzeuginsassen gegen einen der Drehknöpfe 14, 16, 18 oder gegen die Vorderwand 12 des Gehäuses 10, so wird auf das Gehäuse und in Richtung des Führungselementes eine Aufschlagkraftkomponente erzeugt, die in Fig. 5 durch den Pfeil F dargestellt ist. Durch diese Aufschlagkraftkomponente F werden die Umgreifelemente 22 jeweils gegen die Anlageelemente 62 und diese wiederum gegen die wulstförmigen Abschnitte 66 der entsprechenden Führungselemente 60 gedrückt, wobei sich die Innendurchmesser der Anlageelemente 62 in Abhängigkeit der Höhe der auf die Anlageelemente 62 wirkenden Aufschlagkraftkomponente F nach und nach aufweitet. Erreicht die Aufschlagkraftkomponente F einen vorbestimmten Maximalwert, der nachfolgend als Fₘₐₓ bezeichnet wird, so weitet sich der Innendurchmesser des Anlageelementes 62 derart auf, dass das Anlageelement 62 über den maximalen Durchmesser des wulstförmigen Abschnittes 66 des Führungselementes 60 und anschließend weiter entlang des Führungsabschnittes 64 in Richtung der in Fig. 7 dargestellten zweiten Stellung gleitet.

Auf diese Weise wird, wie bei dem zuvor beschriebenen ersten alternativen Ausführungsbeispiel der Bedieneinrichtung der vorliegenden Erfindung, das Gehäuse 10 samt der von der Vorderwand 12 des Gehäuses 10 vorstehende Drehknöpfe 14, 16, 18 vollständig in der Aussparung 24 des Fahrzeugcockpits 26 versenkt. Auf diese Weise können schwerwiegende Verletzungen des Fahrzeuginsassen verhindert werden.

Auch hier sollte klar sein, dass der vorbestimmte Maximalwert Fₘₐₓ der Aufschlagkraftkomponente F beliebig einstellbar ist. Zur Erfüllung der EU-Richtlinie ECE-R21 sollte der Wert für Fₘₐₓ jedoch 37,8 daN nicht überschreiten. Der vorbestimmte Maximalwert Fₘₐₓ wird im wesentlichen durch die Durchmesserdifferenz des Innendurchmesser des Anlageelementes 62 und dem maximalen Durchmesser des wulstförmigen Abschnittes 66 des Führungselementes 60 sowie durch die Elastizität des Anlageelementes 62 bestimmt. Die Elastizität des Anlageelementes 62 wiederum kann zum einen durch das Material beeinflusst werden, aus dem das Anlageelement 62 hergestellt ist. Zum anderen kann die Elastizität des Anlageelementes 62 bzw. die Aufweitungsfähigkeit des Innendurchmessers des Anlageelementes 62 durch die Formgebung des Anlageelementes 62 beeinflusst werden, wie in Fig. 8 beispielhaft dargestellt ist.

Fig. 8 zeigt eine Draufsicht des Anlageelementes 62. Wie zu erkennen ist, ist das Anlageelement 62 im wesentlichen ringförmig. Um das Aufweitungsvermögen des Innendurchmessers des Anlageelementes 62 zu erhöhen, ist der Innendurchmesser in regelmäßigen Abständen durch entsprechende Aussparungen 80 aufgeweitet, so dass die den Innendurchmesser definierenden Abschnitte 82 entsprechend geschwächt werden und sich somit einfacher aufweiten können. Der Außendurchmesser des Anlageelementes 62 folgt im wesentlichen der durch die Aussparungen 80 und Abschnitte 82 erzeugten Kontur.

Es sollte klar sein, dass die in der Zeichnung dargestellten Ausführungsbeispiele modifiziert oder variiert werden können, ohne den durch die Ansprüche definierten Schutzbereich zu verlassen. Beispielsweise können die Umgreifelemente 22 der in den Fign. 2 bis 4 dargestellten Alternative der Bedieneinrichtung gemäß der vorliegenden Erfindung eine ähnliche Form wie das in Fig. 8 dargestellte Anlageelement 62 aufweisen. Auch ist die Anzahl der verwendeten Umgreifelemente und Führungselemente frei wählbar. Ferner sollte klar sein, dass einzelne Merkmale, die nur in Bezug auf eine alternative Ausführungsform beschrieben wurden, ebenso auf die anderen alternativen Ausführungsformen übertragen werden können, ohne den durch die beiliegenden Ansprüche definierten Schutzbereich zu verlassen. Beispielsweise können nicht nur die Umgreifelemente der ersten alternativen Bedieneinrichtung gemäß der vorliegenden Erfindung "schwimmend", d.h. mit radialem Spiel, an den entsprechenden Führungselementen gehalten sein, sondern auch diejenigen der zweiten Alternative.

## Patentansprüche

1. Bedien- und/oder Anzeigeeinrichtung für den Innenraum eines Fahrzeugs, insbesondere Fahrzeugbedieneinheit, mit
- einem Gehäuse (10),
- mindestens einem Führungselement (28;50;60), das an dem Fahrzeug befestigbar ist, und
- mindestens einem das Führungselement (28;50;60) zumindest teilweise umgreifenden Umgreifelement (22), das an dem Gehäuse (10) angeordnet und zwischen einer ersten und einer zweiten Stellung entlang dem Führungselement (28;50;60) führbar ist,
- wobei das Umgreifelement (22) in der ersten Stellung ortsfest an dem Führungselement (28;50;60) gehalten ist und nach Aufbringen einer einen vorbestimmten Maximalwert (Fₘₐₓ) überschreitenden, auf das Gehäuse und in Richtung entlang dem Führungselement (28;50;60) wirkenden Aufschlagkraft (F) zwischen der ersten Stellung und der zweiten Stellung entlang dem Führungselement (28;50;60) führbar ist,
**dadurch gekennzeichnet,**
- **dass** das Umgreifelement (22) rastend in der ersten Stellung an dem Führungselement (28) gehalten ist.

2. Bedien- und/oder Anzeigeeinrichtung nach Anspruch 1, **dadurch gekennzeichnet, dass** das Umgreifelement (22) in einer in dem Führungselement (28) ausgebildeten Nut (34) rastend gehalten ist.

3. Bedien- und/oder Anzeigeeinrichtung nach Anspruch 1, **dadurch gekennzeichnet, dass** die Bedien- und Anzeigeeinrichtung ferner ein das Führungselement (60) zumindest teilweise umschließendes, rastend an diesem gehaltenes Anlageelement (62) aufweist, an dem das Umgreifelement (22) anliegt.

4. Bedien- und/oder Anzeigeeinrichtung nach Anspruch 3, **dadurch gekennzeichnet, dass** das Anlageelement (62) ring- oder hülsenförmig ausgebildet ist.

5. Bedien- und/oder Anzeigeeinrichtung nach einem der vorhergehenden Ansprüche, **dadurch gekennzeichnet, dass** das Umgreifelement (22) schwimmend an dem Führungselement (28;50;60) gehalten ist.

## Claims

1. Control and/or display for the interior of a vehicle, in particular a vehicle control device, comprising
- a housing (10),
- at least one guide element (28; 50; 60) adapted to be mounted to the vehicle, and
- at least one embracing element (22) at least partly embracing the guide element (28; 50; 60), the embracing element being arranged at the housing (10) and being guidable along the guide element (28; 50; 60) between a first and a second position,
- wherein the embracing element (22), in the first position, is held stationarily at the guide element (28; 50; 60) and, after application of an impact force (F) exceeding a predetermined maximum force (Fₘₐₓ) acting on the housing and along the guide element (28; 50; 60), is guidable along the guide element (28; 50; 60) between the first position and the second position,
**characterized in that**
- the embracing element (22) is engaged in the first position at the guide element (28).

2. Control and/or display according to claim 1, **characterized in that** the embracing element (22) is engaged in a groove (34) formed in the guide element (28).

3. Control and/or display according to claim 1, **characterized in that** the control and display further comprises an abutment element (62) that at least partly encloses the guide element (60) and is engaged to the same, the embracing element (22) abutting on the abutment element.

4. Control and/or display according to claim 3, **characterized in that** the abutment element (62) is annular or sleeve-shaped.

5. Control and/or display of one of the preceding claims, **characterized in that** the embracing element (22) is held floating at the guide element (28; 50; 60).

## Revendications

1. Dispositif de commande et/ou d'affichage pour l'habitacle d'un véhicule, notamment dispositif de commande pour un véhicule, comprenant
- un boîtier (10),
- au moins un élément de guidage (28; 50; 60) apte à être monté au véhicule, et
- au moins un élément enveloppant (22) qui enveloppe l'élément de guidage (28; 50; 60) au moins partiellement et qui est situé au boîtier (10) et peut être guidé entre une première et une deuxième position le long de l'élément de guidage (28, 50; 60),
- où, dans la première position, l'élément enveloppant (22) est retenu d'une manière stationnaire sur l'élément de guidage (28; 50; 60) et peut être guidé le long de l'élément de guidage (28; 50; 60) entre la première position et la deuxième position après l'application d'une force d'impact (F) dépassant un valeur maximum (Fₘₐₓ) prédéterminé et agissant le long l'élément de guidage (28; 50; 60),
**caractérisé en ce que**
- l'élément enveloppant (22) est retenu de manière verrouillée dans la première position sur l'élément de guidage (28).

2. Dispositif de commande et/ou d'affichage selon la revendication 1, **caractérisé en ce que** l'élément enveloppant (22) est retenu de manière verrouillée dans une rainure (34) formée dans l'élément de guidage (28).

3. Dispositif de commande et/ou d'affichage selon la revendication 1, **caractérisé en ce que** le dispositif de commande et affichage en outre comprend un élément de contact (62) au moins partiellement enveloppant l'élément de guidage (60) et retenu sur le même de manière verrouillée.

4. Dispositif de commande et/ou d'affichage selon la revendication 3, **caractérisé en ce que** l'élément de contact (62) est en forme annulaire ou d'un manche.

5. Dispositif de commande et/ou d'affichage selon une quelconque des revendications précédentes, **caractérisé en ce que** l'élément enveloppant (22) est supporté de manière flottante sur l'élément de guidage (28; 50; 60).
